Europäisches Patentamt

European Patent Office

Office européen des brevets

(11) Publication number: **0 217 497 B1**

## EUROPEAN PATENT SPECIFICATION

(45) Date of publication of patent specification: **07.10.92**    (51) Int. Cl.5: **B41J 5/10**, B41J 5/28

(21) Application number: **86305555.4**

(22) Date of filing: **18.07.86**

(54) **Keyboard for use in an information processing device.**

(30) Priority: **18.07.85 JP 156991/85**
**18.07.85 JP 156992/85**

(43) Date of publication of application:
**08.04.87 Bulletin  87/15**

(45) Publication of the grant of the patent:
**07.10.92 Bulletin  92/41**

(84) Designated Contracting States:
**DE FR GB NL**

(56) References cited:
**DE-A- 2 906 943**
**FR-A- 2 360 427**
**GB-A- 2 076 743**
**GB-A- 2 131 746**

**IBM TECHNICAL DISCLOSURE BULLETIN, vol.
18, no. 5, October 1975, pages 1302, 1303;
N.R. ESHAM, JR.: Two-Level Pushbutton
Switch"**

(73) Proprietor: **Hashimoto, Yoshiro**
**14-9 Tateno cho Nerima-ku**
**Tokyo(JP)**

(72) Inventor: **Hashimoto, Yoshiro**
**14-9 Tateno cho Nerima-ku**
**Tokyo(JP)**

(74) Representative: **Wood, Anthony Charles et al**
**Urquhart-Dykes & Lord 91 Wimpole Street**
**London W1M 8AH(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to a keyboard operable with one hand for use in information processing devices such as word processors and computers.

While some types of keyboards have recently been available for entering information data into an information processing device such as a computer, for example, there has been proposed in Japanese Patent Application Disclosure No. 59-140548 a keyboard in which adjacent keys are pushed at same time to enter a specific key signal.

Japanese Patent Application Disclosure No. 59-98264 discloses a portable keyboard which can be held and handled with one hand and adopts a key arrangement to meet human engineering. This keyboard is made small so that it can be held and operated with one hand, and provided with five keys arranged on a keyboard proper so as to be opposite to the respective fingertips of the operator's hand.

However, these conventional keyboards entail the following problems.

Though the former keyboard is provided with the keys close to the adjacent keys so as to decrease the range in which the operator's finger is transferred to a required key position, the operator will be fatigued with keying work because the keys except for a home key are of a six step type.

The later keyboard is disadvantageous in that force larger than the grasping power for holding the keyboard proper in hand is required for pressing the keys on the keyboard, and therefore, the keying operation with this keyboard is fatiguing. Besides, this keyboard can deal with only 31 ( = (2x2x2x2x2)-1) kinds of key signals, and thus, is not sufficient for practical use.

DE-A-2906943 (Endfield) describes a portable keyboard device operable by one hand, the keyboard being in the form of a truncated pyramid and having six keys, two of which are operated by the user's thumb. The thumb keys are on substantially the same surface as the finger keys.

FR-A-2360427 (IDF) describes a keyboard having keys operable in a number of positions according to the directional pressure of the finger. The combination of contacts made activates a particular letter key.

It is an object of the present invention to provide a keyboard operable with one hand and capable of entering many kinds of key signals while operating a small number of keys.

The invention provides:

A keyboard operable with one hand for use in an information processing device comprising a keyboard base having an upper surface; an index-finger key, a middle-finger key, a ring-finger key and a little-finger key, said keys being disposed onto said upper surface of the keyboard base substantially in a chevron with said middle-finger key being located at the apex of the chevron so that said keys face the fingertips of the operator when the hand of the operator assumes its physiologically rest state on the keyboard with the fingers in a slightly extended and spread state, said keys having respective keytops lying in planes parallel to a common plane; a thumb key mounted to said keyboard base adjacent said index-finger key, said thumb key having a keytop lying in a plane substantially perpendicular to said common plane; and a plurality of switches contactable by said keys including said thumb key when said keys are operated by the fingertips of the operator; the switching contacts operatively actuatable by said thumb key when the thumb (F1) engages the keytop of said thumb key and is moved toward and away from the palm of the hand of the operator in palmar direction substantially parallel to said palm and when the thumb is moved in directions that are perpendicular to said palmar directions.

The keys on the keyboard base are arranged so as to be opposite to the fingertips of the operator's hand in the slightly spread state, whereby the keying operation can be naturally carried out at high speed without straining the operator's hand.

Each key is provided with a plurality of switching contacts which are made by operating the key with the fingers so as to enable many kinds of key signals to be delivered to a computer or the like.

A more complete appreciation of the invention and many of the attendant advantages thereof will be readily obtained as the same becomes better understood by reference to the following detailed description when considered in connection with the accompanying drawings, wherein:

Figure 1 is a perspective view schematically illustrating a keyboard of one embodiment of the present invention;

Figure 2 is an explanatory diagram schematically illustrating the key arrangement of Figure 1;

Figure 3 is an explanatory diagram illustrating a thumb key on the keyboard of Figure 1;

Figure 4 is a perspective view schematically illustrating another embodiment of this invention;

Figure 5 is a side view of Figure 4;

Figure 6 is a plane view of still another embodiment of this invention; and

Figure 7 is a perspective view of a further embodiment of this invention.

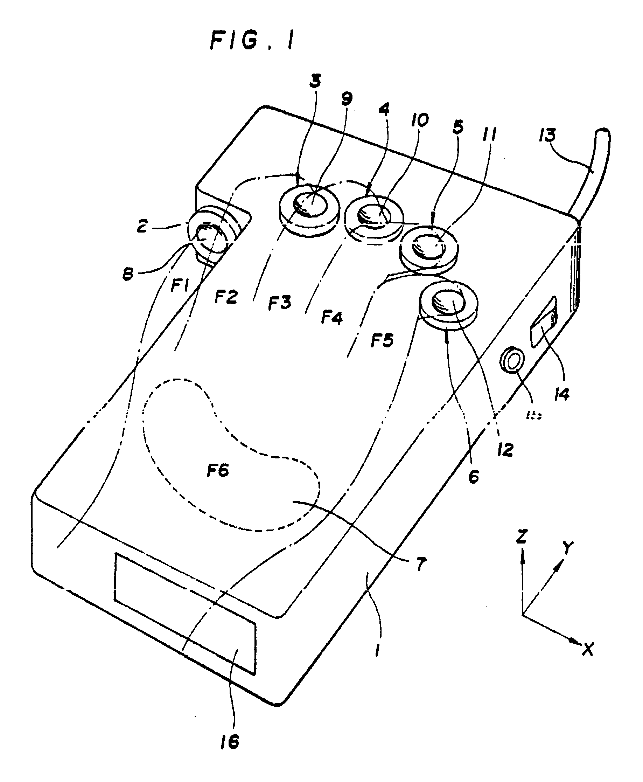

The keyboard according to the present invention, one embodiment of which is illustrated in Figures 1 through 3, can be operated with one hand. Particularly, the illustrated keyboard is operated with the right hand and formed in the shape of a flat board.

With reference to the drawing, 1 denotes a keyboard base of the keyboard for use in an information processing device. The keyboard base 1 may preferably have a width nearly equal to the palm of the hand of an operator. A plurality of keys 2 to 6 are disposed on the keyboard base 1 at positions so as to be opposite to the respective fingertips of the operator's hand being put on the keyboard base in its slightly spread state. At a portion nearer to the operator than the aforementioned keys 2 to 6, there is a palm rest 7 for permitting palm F6 of the operator's hand to be rested. The keys 2 to 6 are provided with switching mechanisms composed of electric contacts and so arranged that the key 2 for the thumb is placed on a different plane from that on which the other keys 3 to 6 are disposed.

To be more specific, on the upper surface of the keyboard base 1, the keys 3 to 6 are arranged with separation at substantially regular distances corresponding to that between the tips of the fingers F2 to F5. That is to say, these keys are disposed to form a chevron line so that the middle-finger key 4 is placed as an apex, the index-finger key 3 and the medical-finger key 5 are separated from the middle-finger key 4 in the direction of X, and the little-finger key 6 is disposed on the right side of the medical-finger key 5. The keytops 9 to 12 of the keys 3 to 6 are substantially level with the upper surface of the keyboard 1.

The keytop 8 of the thumb key 2 is not parallel to those of the other keys 3 to 6 and positioned so that the thumb of the operator is opposite thereto when the palm of the operator's hand is slightly spread out on the keyboard 1, because the direction in which the thumb F1 naturally hits the thumb key is substantially perpendicular to the direction that in that the other fingers F2 to F5 are bent to hit the other keys on the upper surface of the keyboard.

The keys 2 to 6 have switching mechanisms composed of a plurality of contacts arranged as dispersed. To be specific, the thumb key 2 has a neutral position 2N at the centre thereof and contacts 2R, 2L which are selectively made by moving the key in the direction of X relative to the neutral position 2N. The thumb key 2 can also be moved in the direction perpendicular to the palm of the hand (directions of palmar abduction and retroposition) so as to selectively make contacts 2U, 2D by moving the thumb key 2 in the direction of Z relative to the neutral position 2N.

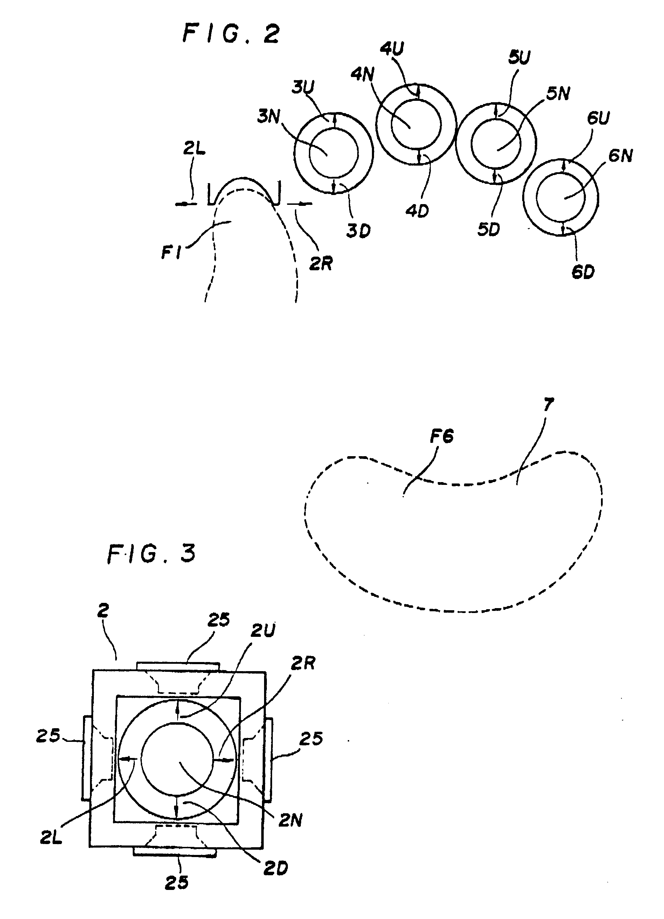

Although the keys 4 to 6 other than the index-finger keys 3 are not necessarily moved in the Y-direction, it is preferable to permit these keys to be moved in that direction. In the case of permitting the keys to be moved in all directions, these keys have neutral positions 3N to 6N at the middle points and make contacts 3U, 3D ... 6U, 6D by stirring the fingers F2 to F5 in the direction of Y. The aforementioned contracts may be formed of switching means 25 of a mechanical type as illustrated in Figure 3, or otherwise composed of piezo-electric elements, etc. Also, switching means which can be operated by pushing the keys held in their neutral positions 3N to 6N in the direction perpendicular to the upper surface of the keyboard may be assembled in the keys 3 to 6 as required.

Furthermore, the keyboard base 1 has a cable 13 connected with an information processing device such as a word processor. As occasion demands, a power switch 14, a monitoring output terminal 15 for earphones and so on, and a holder or slot 16 for a memory cassette may be provided on the keyboard base 1.

The action of the aforementioned construction of the keyboard will be explained hereinafter.

When the palm of the operator's hand F6 is put on the palm rest 7 of the keyboard in such a state that the fingers F1 to F5 are slightly spread out, the fingers assume the basic posture in which the fingertips touch or are close to the corresponding keys 2 to 6 held in their neutral positions 2N to 6N. In this case, the knuckle portions of the fingers are out of contact with the upper surface of the keyboard base so as not to hinder the movement of the finger.

In principle, key data to be delivered from this keyboard is discriminated by a combination of a key signal given via one of the contact positions 2N, 2U, 2D, 2R and 2L of the thumb key 2 and another key signal from one or more of the contact positions 3N, 3D ... 6U, 6D of the other keys 3 to 6.

According to the keyboard of the construction described above, it brings about the following effects.

    a) Since the contact position of the thumb key 2 can be optionally elected from among the neutral position 2N and the contact positions 2U, 2D, 2R and 2L, a number of keys capable of delivering key data can be substantially increased, and key data to be inputted from the keyboard can be discriminated by finding one of the keys 3 to 6, which is pressed at the same time that the thumb key 2 is effected. Therefore, 404 kinds of key data ($=(5\times3\times3\times3\times3)-1$) can be inputted at maximum, if the neutral positions 2N to 6N of all keys 2 to 6 are used as available keys effective in keying. However, if the keyboard is provided with switching mechanisms in which key data can be delivered by pushing down the keys 3 to 6 in the direction of Z as done in a conventional keyboard, 1279 kinds of key data ($=(5\times4\times4\times4\times4)-1$) can be inputted at maximum.

    b) The keys 2 to 6 are so arranged that the fingers F1 to F5 can assume their natural postures and the musculature of the hand in its standby posture is little strained. Therefore, keying operation can readily be carried out by using in combination a plurality of the keys.

c) The keys 3 to 6 other than the thumb key 2 are arranged on the keyboard in a chevron line having the middle-finger key 4 as an apex, so that the fingers F2 to F5 other than the thumb F1 can assume their natural postures in equiangular relationship when they are slightly spread out. Therefore, the fingers F2 to F5 can be moved in the same condition in keying.

d) Because the keytop 8 of the thumb key 2 is perpendicular to the keytops 9 to 12 being on a level with the upper surface of the keyboard base 1, the thumb key can readily be operated merely by subjecting the thumb to extension or flexion movement to operate the thumb key in the direction parallel to the upper surface of the keyboard base 1 (direction "X"). Besides, as occasion demands, the thumb key 2 may be provided with additional contacts which are vertically arranged relative to the neutral position thereof and can be electrically established by subjecting the thumb to movement of palmar abduction or retroposition to move the thumb key in the direction perpendicular to the upper surface of the keyboard base 1 (direction "Z").

e) Since the palm of the hand F6 can be put on the palm rest 7 So as to shore up the hand and arm of the operator, the operator will not feel fatigued.

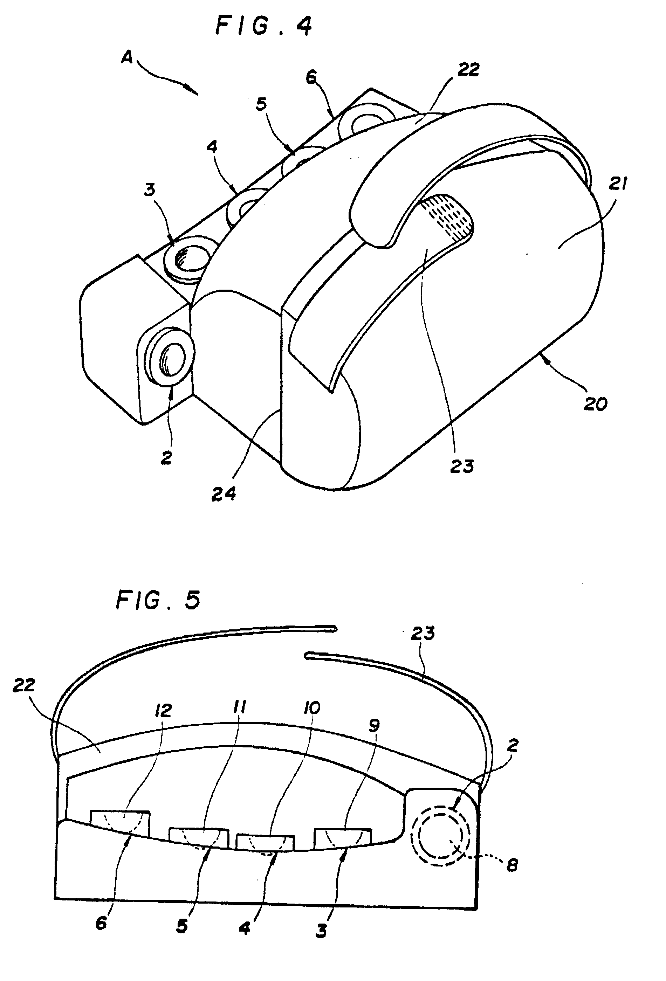

Figure 4 shows another embodiment of the keyboard for use in an information processing device according to the present invention.

The keyboard in this embodiment comprises a keyboard base 20 formed in a flat shape having its upper surface curved. The upper surface of the keyboard base 20 is provided with a palm rest 21 which is somewhat swollen to meet the configuration of the palm and an intermediate portion 22 having its upper surface lower than the palm rest 21. The keys 3 to 6 other than the thumb key are so arranged that the keytop 10 of the middle-finger key 4 is lowest in comparison with those of the other keys, and the other keys 3, 5 and 6 are positioned on the sides of the middle-finger key 4 and have their keytops 9, 11 and 12 higher than that of the middle-finger key 4.

In this embodiment, the aforementioned palm rest 21 is telescopically engaged with the intermediate portion 22 at a stepped portion 24. Moreover, on the palm rest 21, there may be disposed a set of retaining bands 23 for fastening the hand onto the keyboard.

According to this embodiment, the fingers can be brought to the suitable standby state in which the fingertips are naturally opposite to the keytops of the respective keys merely by putting the palm of the hand F6 on the palm rest 21 and slightly spreading the fingers. Furthermore, since the operator's hand is fastened to the keyboard by means of the retaining bands 23, the operator can carry about the keyboard to put it to practical use. Particularly, the keyboard of this structure has an advantage that it permits comfortably keying operations because the phalanx portions of the fingers do not touch the intermediate portion 22 which is lower than the palm rest 21, and that it can be fitted to the hands of different sizes as the palm rest and the intermediate portion are telescopically engaged with each other.

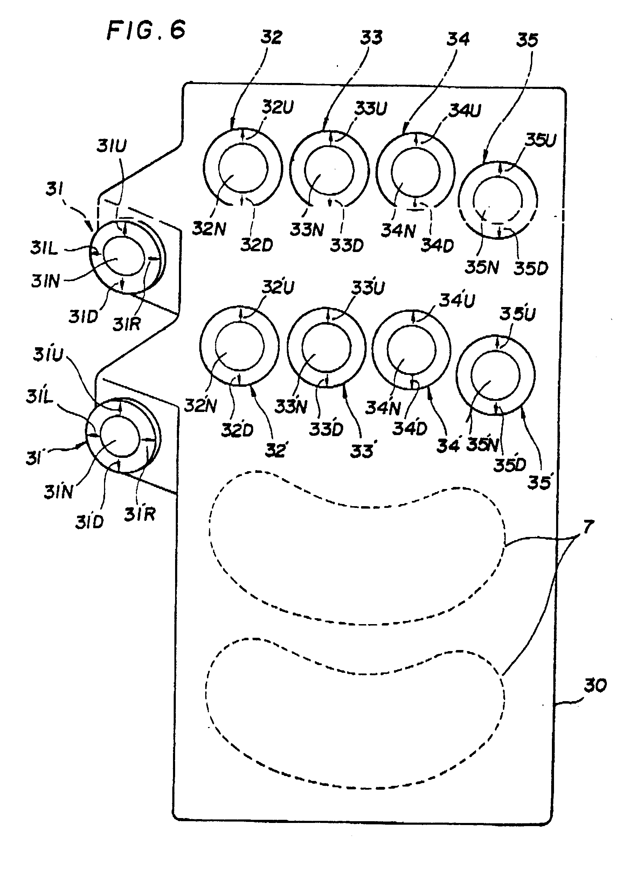

Figure 6 is a plan view illustrating still another embodiment of the keyboard according to this invention.

In this embodiment, on the upper surface of a keyboard base 30, there are arranged a plurality of keys 32 to 35 for the fingers other than the thumb in a row in a lateral direction so that, when the palm of the hand is put on the palm rest 7 and the fingers are slightly spread out, the fingertips of the operator's hand are opposite to the keytops of the keys 32 to 35. On the underside of the row of the keys 32 to 35, keys 32' to 35' for the fingers other than the thumb are arranged in the same state as the keys 32 to 35. Two thumb keys 31 and 31' are disposed on slant faces formed on the side wall of the keyboard base 1 so that the fingertips of the operator's fingers are opposite to the respective keytops of the keys, when the fingers are naturally spread out, so as to effect keying operation by the natural movement of the thumb.

According to this embodiment, by choosing one of the rows of keys 32 to 35 and 32' to 35' as a home position, 160 ($= ((3 \times 3 \times 3 \times 3)-1) + ((3 \times 3 \times 3 \times 3)-1)$) kinds of data can be inputted at maximum. In this case, since the thumb keys 31 and 31' can be moved in not only the direction perpendicular to the keytop surface thereof, but also the vertical and lateral directions relative to the keytop, they can be used as function keys capable of inputting 10 ($= 2 \times 5$) kinds of key data. Since the keytops of the thumb keys 31 and 31' are arranged on the slant, the operator can readily operate the thumb keys by stirring his thumb.

Although the keyboard in this embodiment as illustrated is not provided with any specific function key, the thumb keys each having a plurality of switching contacts can be used as function keys. Further, three or more thumb keys may be provided in the same manner as the aforesaid thumb key.

Although only the keyboards operable with the right hand are illustrated in the drawings, a keyboard for the left hand can be formed merely by adopting key arrangement contrary to that of the preceding embodiments and may be used together with the keyboard for the right hand.

Various modifications of the keyboard according to this invention can be accomplished by combining, in various ways, the components of the keyboard bases 1, 20, 30 in the aforementioned embodiments, i.e, the thumb keys 2, 31, 31' and the other keys 3-6, 32-35, and 32'-35'.

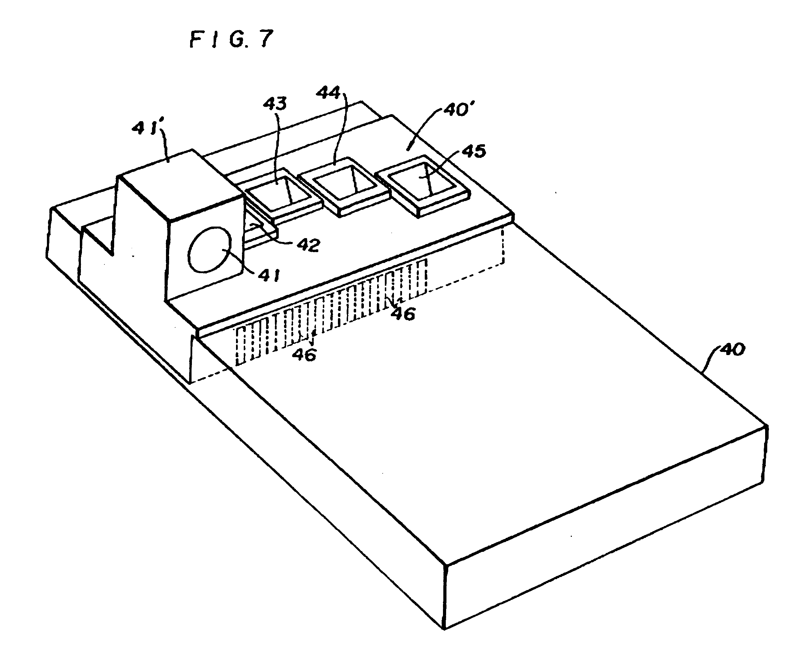

A further embodiment of the present invention will be described with reference to Figure 7. A keyboard of this embodiment comprises a keyboard base 40 and a key unit 40' which is detachably fitted into the slot formed in the keyboard base 40. The key unit 40' is provided with a thumb key 41 and other finger keys 42 to 45 of similar structure to those in the preceding embodiments. The thumb key 41 is mounted on one front side of a raised portion 41' on the key unit 40' so that the operator can naturally hit the thumb key 41 with his thumb while operating the other keys. Electrical connection between the keyboard base 40 and the key unit 40' is established by contact means 46 disposed on the opposite surfaces of the keyboard base 40 and the key unit 40'.

According to this embodiment, if some key units of different size are prepared, the keyboard can be applied to every hand of different shape and size by attaching the key unit of suitable size to the keyboard base.

As is plain from the foregoing description, the keyboard according to the present invention can be practically used similarly to a conventional keyboard having a large number of keys, since the keys each having a plurality of switching contacts which are effected by stirring the finger are disposed on the keyboard base. Further, the keys can be operated to enter various key signals only by lightly moving the fingertips without laboring the operator's hand, thereby to reduce an impact given to the finger and enjoy speeding-up of the keying operation.

Although the invention has been described in its preferred form with a certain degree of particularity, it is understood that the present disclosure of the preferred form has been changed in the details of construction and the combination and arrangement of parts may be resorted to without departing from the scope of the claims.

## Claims

1. A keyboard operable with one hand for use in an information processing device comprising a keyboard base (1,20,30,40) having an upper surface; an index-finger key (3, 32,42), a middle-finger key (4,33,43), a ring-finger key (5,34,44) and a little-finger key (6,35,45), said keys being disposed onto said upper surface of the keyboard base substantially in a chevron with said middle-finger key being located at the apex of the chevron so that said keys face the fingertips of the operator when the hand of the operator assumes its physiologically rest state on the keyboard with the fingers in a slightly extended and spread state, said keys having respective keytops lying in planes parallel to a common plane; a thumb key (2,31,41) mounted to said keyboard base adjacent said index-finger key, said thumb key having a keytop lying in a plane substantially perpendicular to said common plane; and a plurality of switches contactable by said keys including said thumb key when said keys are operated by the fingertips of the operator; characterised in that the switching contacts are operatively actuatable by said thumb key when the thumb (F1) engages the keytop of said thumb key and is moved toward and away from the palm of the hand of the operator in palmar direction substantially parallel to said palm and when the thumb is moved in directions that are perpendicular to said palmar directions.

2. A keyboard according to Claim 1, wherein said thumb key (2,31,31') is in a position below the plane of the other keys.

3. A keyboard according to Claim 1, wherein said thumb key (2) is substantially on a level with the other keys.

4. A keyboard according to Claim 1, further comprising a key unit (40') capable of being detachably attached to said keyboard base (40), and wherein said keys (41-45) are disposed on said key unit (40') and electrical connection between said key unit (40') and keyboard base (40) is established by means of contact means (46).

## Patentansprüche

1. Tastatur, die mit einer Hand bedienbar ist, für eine Informationen verarbeitende Vorrichtung, mit einem Tastaturgestell (1, 20, 30, 40), das eine obere Fläche aufweist; einer Zeigefingertaste (3, 32, 42), einer Mittelfingertaste (4, 33, 43), einer Ringfingertaste (5, 34, 44) und einer Kleinfingertaste (6, 35, 45), wobei die Tasten an der oberen Fläche des Tastaturgestells im wesentlichen winkelförmig vorgesehen sind mit einer Anordnung der Mittelfingertaste an der Winkelspitze, sodaß die Tasten den Fingerspitzen des Bedieners gegenüberliegen, wenn die Hand des Bedieners ihre physiologische Ruhelage an der Tastatur einnimmt und dabei die Finger eine leicht gestreckte und gespreizte Stellung einnehmen, wobei die Tasten entsprechende Tastenoberteile aufweisen, die in Ebenen parallel zu einer gemeinsamen Ebene liegen; einer Daumentaste (2, 31, 41), die an dem Tastaturgestell neben der Zeigefingertaste angeordnet ist, wobei diese Daumentaste ein Tastenoberteil aufweist, welches in einer Ebene im wesentlichen senkrecht zu der gemeinsamen Ebene liegt; und einer Vielzahl von Schaltern, die von den Tasten unter Einschluß der Daumentaste berührbar sind, wenn die Tasten durch die Fingerspitzen des Bedieners bedient werden; dadurch gekennzeichnet, daß die Schalterkontakte durch die Daumentaste operativ betätigbar sind, wenn der Daumen (F1) auf das Tastenoberteil der Daumentaste einwirkt und zu der Handfläche des Bedieners hin und davon weg in einer Handflächenrichtung im wesentlichen parallel zu der Handfläche und wenn der Daumen in Richtungen senkrecht zu dieser Handflächenrichtung bewegt wird.

2. Tastatur nach Anspruch 1, bei welcher die Daumentaste (2, 31, 31') an einer Stelle unterhalb der Ebene der anderen Tasten angeordnet ist.

3. Tastatur nach Anspruch 1, bei welcher die Daumentaste (2) im wesentlichen in einer gleichen Höhenlage wie die anderen Tasten angeordnet ist.

4. Tastatur nach Anspruch 1, bei welcher noch eine Tasteneinheit (40') vorgesehen ist, die an dem Tastaturgestell (40) abnehmbar befestigt werden kann, und bei welcher die Tasten (41 bis 45) an dieser Tasteneinheit angeordnet sind und eine elektrische Verbindung zwischen der Tasteneinheit (40') und dem Tastaturgestell (40) mittels einer Kontakteinrichtung (46) hergestellt ist.

**Revendications**

1. Un clavier utilisable d'une seule main dans des dispositifs de traitement d'informations comprenant une base de clavier (1,20,30,40) ayant une surface supérieure; une touche pour l'index (3,32,42), une touche pour le médius (4,33,43), une touche pour l'annulaire (5,34,44) et une touche pour l'auriculaire (6,35,45), lesdites touches étant disposées sur ladite surface supérieure de la base de clavier, substantiellement en forme de chevron avec la touche pour ledit médius située au sommet du chevron de sorte que lesdites touches soient en face des extrémités des doigts de l'opérateur lorsque la main de l'opérateur adopte son état de repos physiologique sur le clavier avec les doigts dans un état légèrement allongé et déployé, lesdites touches ayant leur dessus respectifs situés dans un plan parallèle au plan commun; une touche pour le pouce (2,31,41) montée sur ladite base de clavier adjacente à ladite touche pour index, ladite touche pour le pouce ayant son dessus situé dans un plan substantiellement perpendiculaire audit plan commun; et une pluralité de commutateurs dont les contacts sont mis en oeuvre par lesdites touches y compris ladite touche pour le pouce lorsque lesdites touches sont utilisées par les extrémités des doigts de l'opérateur; caractérisé en ce que les contacts de commutation sont activement mis en oeuvre par ladite touche pour le pouce lorsque le pouce (F1) appuie sur le dessus de ladite touche pour le pouce et qu'il est approché ou éloigné de la paume de la main de l'opérateur selon la direction palmaire substantiellement parallèle à ladite paume et lorsque le pouce est déplacé selon des directions qui sont perpendiculaires à ladite direction palmaire.

2. Un clavier selon la revendication 1, dans lequel ladite touche pour le pouce (2,31,31') est dans une position au dessous du plan des autres touches.

3. Un clavier selon la revendication 1, dans lequel ladite touche pour le pouce (2) est substantiellement dans le plan des autres touches.

4. Un clavier selon la revendication 1, comprenant de plus un bloc de touches (40') amovible fixé à ladite base de clavier (40), lesdites touches (41-45) étant disposées sur ledit bloc de touches (40') et les connexions électriques entre ledit bloc de touche (40') et la base de clavier (40) étant établies grâce à des moyens à contacts (46).

FIG. 1

FIG. 2

FIG. 3

FIG. 4

FIG. 5

FIG.6

FIG.7